# EUROPEAN PATENT SPECIFICATION

(11) **EP 2 316 717 B1**
(45) Date of publication and mention of the grant of the patent: **26.03.2014**
(21) Application number: 10189395.6
(22) Date of filing: 29.10.2010
(51) Int. Cl.: B62J 9/00

(54) **Storage box for a motorcycle**
Aufbewahrungsbehälter für ein Motorrad
Boîte de stockage pour une motocyclette

(30) Priority: 03.11.2009 IT MI20091919
(43) Date of publication of application: 04.05.2011
(73) Proprietor: GIVI S.r.l. UNIPERSONALE, 25020 Flero (BS) (IT)
(72) Inventor: Visenzi, Giuseppe, 25123 Brescia (BS) (IT)
(74) Representative: Ottazzo, Marco Francesco Agostino

(56) References cited:
- WO-A1-02/34613
- DE-U1- 9 300 836
- JP-U- 57 057 172
- US-A- 3 788 532

## Description

The present invention refers to a storage box or trunk for motorcycles, in particular a storage box or trunk for motorcycles of the type provided with two distinct opening covers.

Trunks or storage boxes suitable for receiving luggage, helmets or other accessories are very commonly used on motorcycles in general. Such storage boxes are usually applied, in a detachable or non detachable manner, on the rear part of the motorcycle and normally comprise a base, provided with means for coupling with the frame of the motorcycle, and a cover hinged to such a base. Means for closing the cover with respect to its base, for example of the key or combination code type, complete the storage boxes for motorcycles of the known type and make them safe in any type of condition of use.

The opening of the storage boxes for motorcycles of the known type can be difficult in some situations of use, for example when there is not enough space to carry out a complete rotation of the cover around its axis. Storage boxes have thus been made for motorcycles provided with a double opening, that is to say with two distinct covers having different dimensions, so as to adapt the accessibility of the storage box to the specific conditions of use. For example, if there is not enough space for the main cover of the storage box to completely open, or in the case in which small sized objects must be inserted into the storage box itself, it is possible to just use the smaller cover, sized in a manner such as to have a bulk, in open position, that is noticeably smaller with respect to the bulk of the main cover.

A storage box for motorcycles provided with a double system for opening the cover is described, for example, in European patent N. EP 1 328 435 B1 to the same applicant. Such a European patent illustrates a storage box for which it is possible to open as one desires the entire cover, or only a portion thereof. In order to be independent, however, the two covers of the storage box must be each provided with rotation hinges, but especially with distinct closing means, thus making the storage box in its entirety particularly costly to manufacture and complicated to use with respect to conventional storage boxes for motorcycles provided with a single cover.

<Another storage box for motorcycles provided with a double system for opening the cover is described, for example, in document N. JP 57 057172 U.>

The purpose of the present invention is therefore that of making a storage box or trunk for motorcycles, in particular a storage box or trunk for motorcycles of the type provided with two opening covers, that is able to solve the aforementioned drawbacks of the prior art in an extremely simple, cost-effective and particularly functional manner.

In detail, one purpose of the invention is that of making a storage box for motorcycles provided with a double opening that is particularly simple and intuitive to use, since it is provided with a single closing means.

Another purpose of the invention is that of making a storage box for motorcycles provided with a double opening that is particularly cost-effective to manufacture, whilst keeping the same strength, safety and reliability properties, as storage boxes for motorcycles of the known type.

These purposes according to the present invention are achieved by making a storage box for motorcycles, as outlined in claim 1.

Further characteristics of the invention are highlighted in the dependent claims, that are an integrating part of the present description.

The characteristics and the advantages of a storage box or trunk for motorcycles, in particular a storage box or trunk for motorcycles of the type provided with two distinct opening covers, according to the present invention shall become clearer from the following description, given as an example and not for limiting purposes, with reference to the attached schematic drawings, in which:

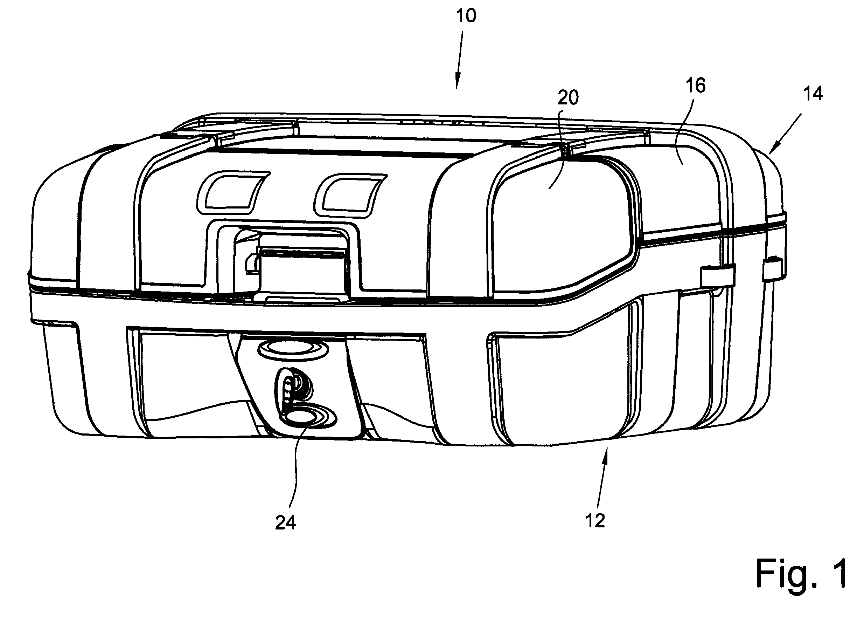

figure 1 is a perspective view of a preferred embodiment of the storage box for motorcycles according to the invention, shown in closed configuration;

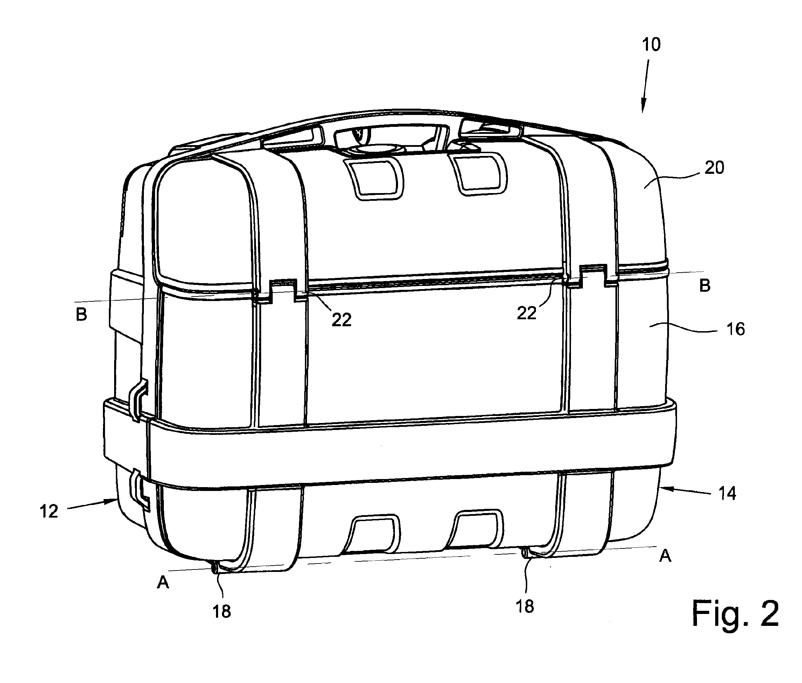

figure 2 is another perspective view of the storage box for motorcycles of figure 1;
figure 3 is a detail view, partially in section, of some inner components of the storage box for motorcycles of figure 1;
figure 4 is another detail view, partially in section, of some inner components of the storage box for motorcycles of figure 1, shown in a first operative configuration;
figure 5 is a further detail view, partially in section, of some inner components of the storage box for motorcycles of figure 1, shown in a second operative configuration;
figure 6 is a further perspective view of the storage box for motorcycles of figure 1, shown in a first open configuration; and
figure 7 is again another perspective view of the storage box for motorcycles of figure 1, shown in a second open configuration.

With reference to the figures, a preferred embodiment of the storage box for motorcycles according to the present invention is shown, wholly indicated with reference numeral 10. The storage box 10 is of the type that can be applied, preferably in a detachable manner, to the structure of a motorcycle both in a lateral position ("side case") and above the rear mudguard of the vehicle ("rear trunk"), although this does not rule out other applications in different positions on the motorcycle, without for this reason departing from the scope of protection of the present invention.

The storage box 10 first of all comprises a base portion 12, provided with coupling means with the frame or the body of the motorcycle. In detail, the base portion 12 of the storage box 10 can be configured both for direct hooking to the motorcycle, and for hooking to a suitable plate (not shown) in turn fixed to the motorcycle itself.

The storage box 10 then comprises a cover 14 that can be closed on the base portion 12 to define a closed filling space of a predetermined volume. The cover 14 in turn consists of at least one first component 16, rotatably connected to the base portion 12 through one or more hinges 18 that allow it to rotate with respect to such a base portion 12 around a first axis A, and through at least one second component or hatch 20, rotatably connected to the first component 16 through one or more hinges 22 that allow it to rotate with respect to such a first component 16 around a second axis B. The first axis A is preferably parallel with respect to the second axis B.

At least one means 24 for closing/opening the storage box 10 is thus arranged between the second component 20 of the cover 14 and the base portion 12, said means allowing both the entire cover 14 to open/close with respect to the relative base portion 12, and just the second component 20 to open/close with respect to the first component 16 of the cover 14 (as shall be clarified more in detail in the rest of the description), and the storage box 10 to be attached/detached with respect to the motorcycle.

According to the invention, on the first component 16 and on the second component 20 of the cover 14, as well as on the base portion 12, releasable constraining means are foreseen such as to allow the selective opening, with respect to the base portion 12 and exclusively acting upon the closing/opening means 24, of just the second component 20 of the cover 14 or of the assembly consisting of the first component 16 and of the second component 20 of the cover 14. In other words, thanks to the presence of the aforementioned releasable constraining means, described in greater detail in the rest of the description, and by exclusively acting upon the single closing/opening means 24 foreseen on the storage box 10, the following can be selectively opened/closed:
- the second component 20 of the cover 14, through its rotation around the axis B, for a partial opening of the cover 14 itself suitable for introducing in the storage box 10 small sized objects and/or for accessing the storage box 10 in conditions of lack of space;
- the entire cover 14 or, in other words, the assembly consisting of the first component 16 and of the second component 20 that, in aligned position, form the cover 14, through a rotation of the cover 14 itself around the axis A, so as to have full access to the filling space of the storage box 10.

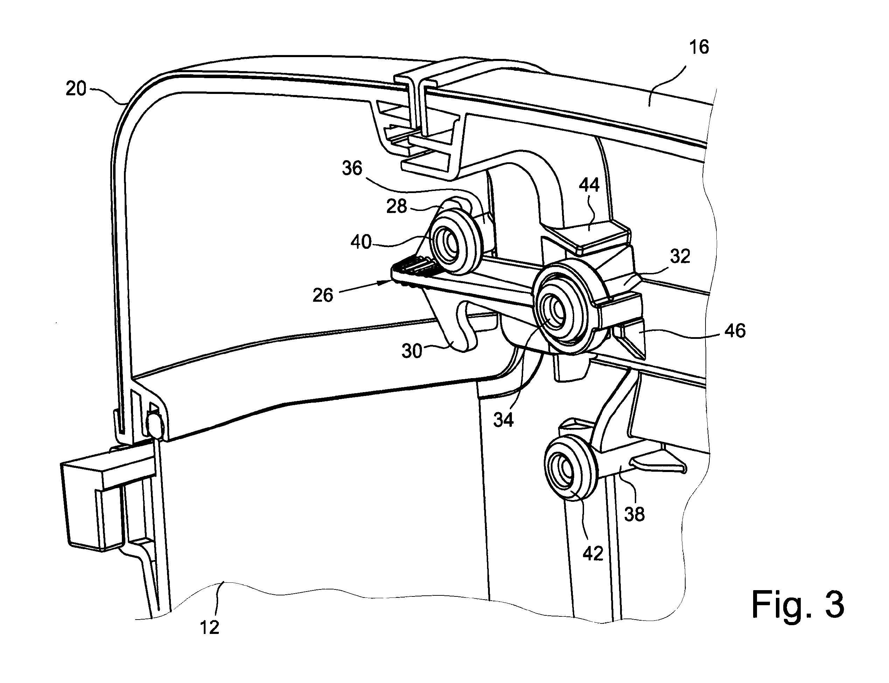

According to a preferred embodiment of the present invention, shown in figures 3 to 5, the releasable constraining means between the various components 12, 16 and 20 of the storage box 10 are formed in the following way. Inside one of the components of the cover 14, for example the first component 16, an anchor-shaped element 26 is rotatably fixed, that is to say provided with two distinct opposite hooked portions 28 and 30. The anchor-shaped element 26 is free to rotate around a pin 32 integral with the inner surface of the first component 16 of the cover 14. In order to prevent the anchor-shaped element 26 from accidentally detaching, a fixing washer 34 is thus foreseen screwed on the pin 32, so that the element 26 itself is arranged between the inner surface of the first component 16 and such a fixing washer 34 (see figure 3).

A pin 36 of the second component 20 and a pin 38 of the base portion 12 are then respectively formed on the inner surface of the second component 20 of the cover 14 and on the inner surface of the base portion 12. Respective washers 40 and 42 are then fixed on the ends of such pins 36 and 38, for example through screwing.

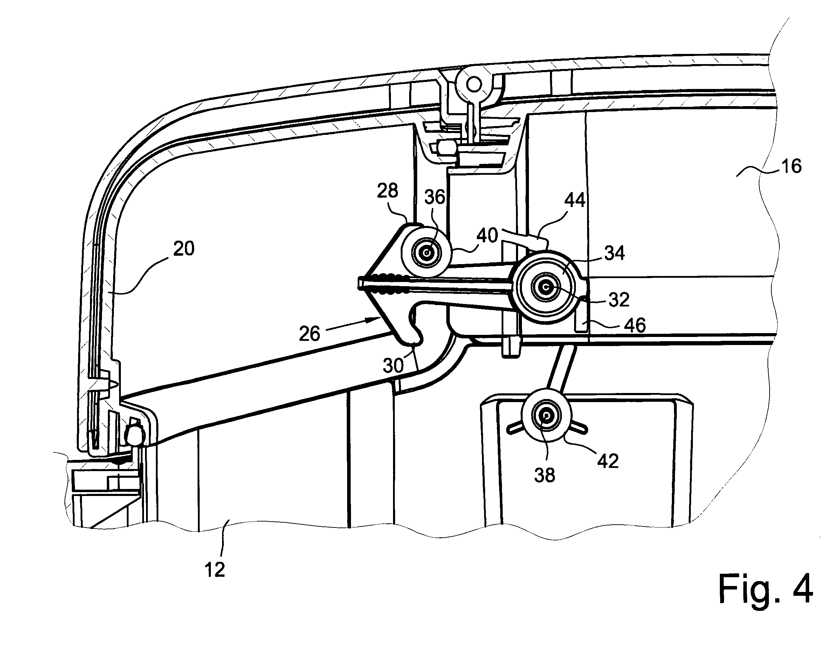

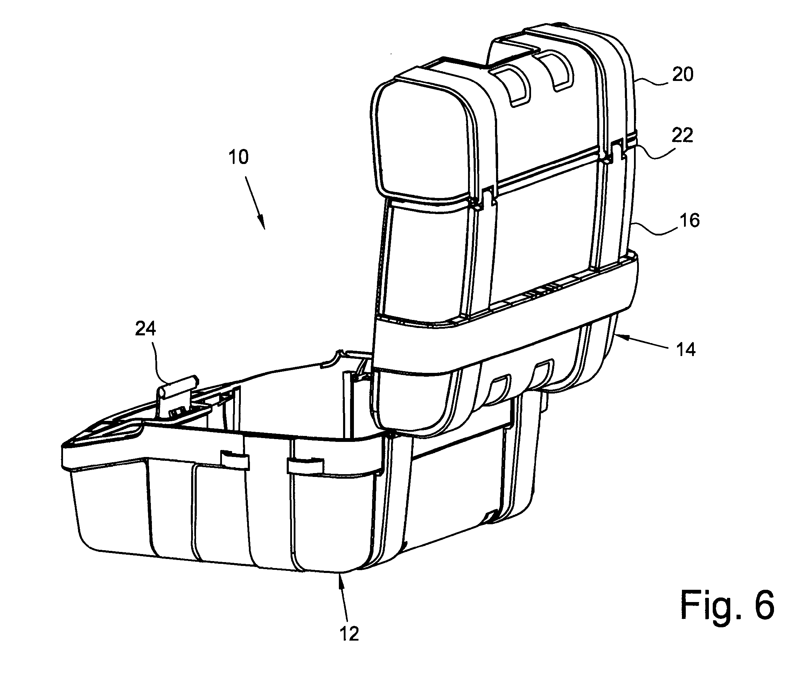

The operation of the releasable constraining means between the various components 12, 16 and 20 of the storage box 10 is therefore as follows. When the anchor-shaped element 26 is engaged with the pin 36 of the second component 20 or, more precisely, when one of the two opposite hooked portions 28 of the anchor-shaped element 26 is snap-coupled with the pin 36 of the second component 20 and is held by the respective washer 40 (figure 4), the constraint is obtained between the first component 16 and the second component 20 of the cover 14. The rotation of the second component 20 with respect to the first component 16 is thus prevented. The cover 14 therefore behaves like a single assembly and, once the closing/opening means 24 has been detached, the cover 14 itself opens completely into the configuration shown in figure 6, rotating with respect to the base portion 12 around the hinges 18 and to the relative rotation axis A.

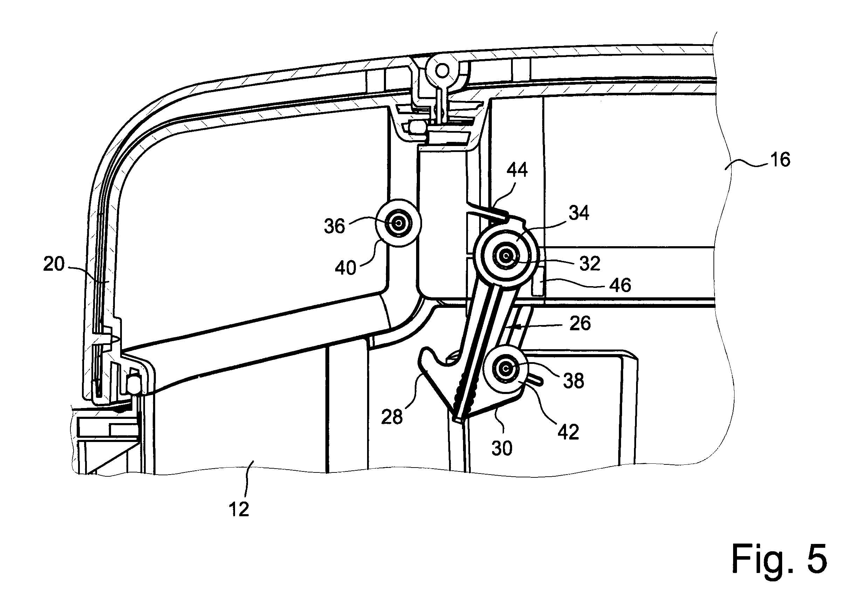

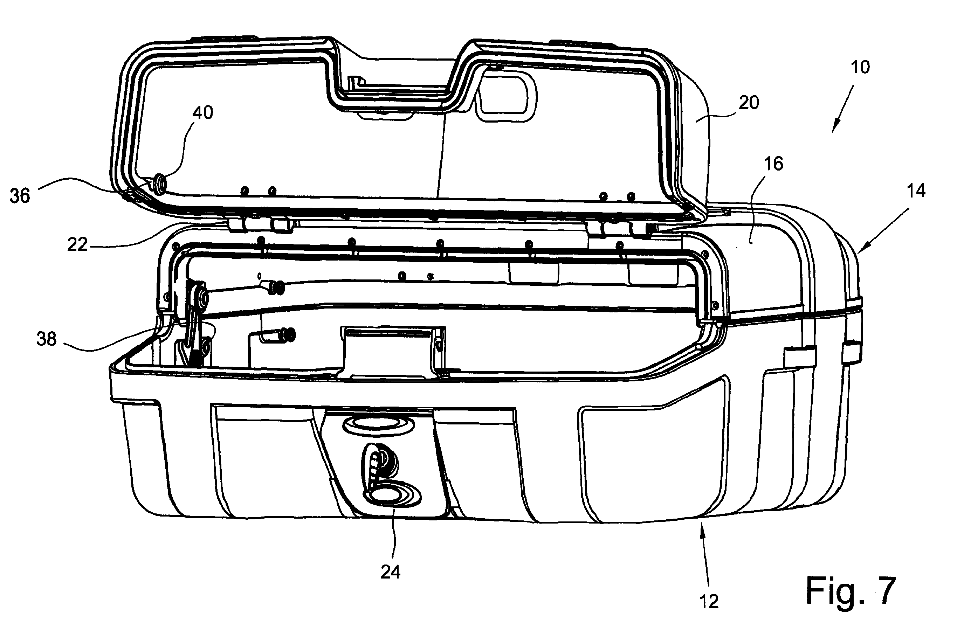

Vice versa, when the anchor-shaped element 26 is engaged with the pin 38 formed on the base portion 12 or, more precisely, when the other hooked portion 30 of the anchor-shaped element 26 is snap-coupled with the pin 38 of the base portion 12 and is held by the respective washer 42 (figure 5), the constraint between the first component 16 of the cover 14 and the base portion 12 of the storage box is obtained. The rotation of the first component 16 of the cover 14 is thus prevented with respect to the base portion 12. Just the first component 16 of the cover 14 is thus integrally coupled, in closed position, with the base portion 12, whereas the second component 20 of the cover 14 itself can open like "a hatch" (again once the single closing/opening means 24, which the storage box 10 is provided with, has been detached) rotating with respect to the first component 16 around the hinges 22 and the relative rotation axis B (figure 7).

On the inner surface of the first component 16 of the cover 14 two pegs 44 and 46 have advantageously been formed, operating as rotation stops for the anchor-shaped element 26 and being arranged so that such an element 26 cannot accidentally rotate in an incorrect position, but instead has a rotation angle limited to the two positions of engagement with the two pins 36 and 38.

From the previous description it should thus be clear that the user of the storage box 10 according to the invention can choose and configure the relative opening method in a simple and quick manner. Indeed when opening the storage box 10, the opening modality of the cover 14 can be changed in any moment by acting manually upon the position of the anchor-shaped element 26. The opening/closing of the entire cover 14 or of just the hatch 20 therefore always occurs by operating upon the single closing/opening means 24.

This configuration possibility is very useful, since the complete opening of the cover 14 is the most convenient one for storing a large quantity of objects, whereas opening just the hatch 20 is convenient for taking out small objects from the storage box 10 (especially when it is hooked in a lateral position on the motorcycle) without the risk of spilling all the contents.

It has thus been seen that the storage box for motorcycles according to the present invention achieves the purposes previously highlighted.

The storage box for motorcycles of the present invention thus conceived can in any case undergo numerous modifications and variants, all covered by the same inventive concept; moreover, all the details can be replaced by technically equivalent elements. In practice the materials used, as well as the shapes and sizes, can be any according to the technical requirements.

The scope of protection of the invention is thus defined by the attached claims.

## Claims

1. Storage box (10) for motorcycles, comprising a base portion (12), provided with coupling means with a frame or a body of a motorcycle, and a cover (14) that can be closed on said base portion (12) to define a closed filling space with it, said cover (14) consisting of at least a first component (16) and at least a second component (20) that in aligned position form said cover (14), the first component (16) being hinged, to be opened, to said base portion (12) and the second component (20) being hinged, to be opened like a hatch, to said first component (16), wherein releasable constraining means (26; 36; 38) are provided that are able to move between a position in which they constrain the first component (16) and the second component (20) in aligned position, so that said cover (14) can be totally open, and a position in which they constrain the first component (16) in closed position to said base portion (12) allowing the second component (20) to freely rotate with respect to the first component (16), so that said cover (14) can be partially open, **characterised in that** said releasable constraining means comprise an anchor-shaped element (26), rotatably fixed inside of said first component (16) and able to be selectively engaged with a pin (36) of the second component (20), formed on an inner surface of said second component (20), or with a pin (38) of the base portion (12), formed on an inner surface of said base portion (12).

2. Storage box (10) according to claim 1, **characterised in that** between the second component (20) of the cover (14) and the base portion (12) at least one means (24) for closing/opening the storage box (10) is arranged that allows the assembly consisting of said first component (16) and of said second component (20) of said cover (14) to be opened/closed with respect to said base portion (12) when said anchor-shaped element (26) is engaged with the pin (36) of said second component (20), just the second component (20) of said cover (14) to be opened/closed with respect to said first component (16) when said anchor-shaped element (26) is engaged with the pin (38) of said base portion (12), and the storage box (10) to be attached/detached with respect to the motorcycle.

3. Storage box (10) according to claim 1 or 2, **characterised in that** said anchor-shaped element (26) is provided with two distinct opposite hooked portions (28, 30) that can be snap-engaged, respectively with said pin (36) of the second component (20) or with said pin (38) of the base portion (12).

4. Storage box (10) according to claim 3, **characterised in that** said anchor-shaped element (26) is free to rotate around a pin (32) integral with the inner surface of said first component (16).

5. Storage box (10) according to claim 4, **characterised in that** a washer (34) is fixed on said pin (32) integral with the inner surface of said first component (16), said washer (34) is adapted to prevent said anchor-shaped element (26) from accidentally detaching, so that said anchor-shaped element (26) is arranged between the inner surface of said first component (16) and said washer (34).

6. Storage box (10) according to any one of claims 3 to 5, **characterised in that** respective washers (40, 42) are fixed on the end of said pin (36) of the second component (20) and on the end of said pin (38) of the base portion (12), said washers (40, 42) are respectively adapted to hold said opposite hooked portions (28, 30) when snap-engaged, respectively, with said pin (36) of the second component (20) or with said pin (38) of the base portion (12).

7. Storage box (10) according to any one of claims 3 to 6, **characterised in that** two pegs (44, 46) are formed on the inner surface of said first component (16), said pegs operating as rotation stops for said anchor-shaped element (26) and being arranged so that said anchor-shaped element (26) cannot accidentally rotate into an incorrect position, but instead has a rotation angle limited to the two positions of snap-engagement with said pin (36) of the second component (20) or with said pin (38) of the base portion (12).

8. Storage box (10) according to any one of the previous claims, **characterised in that** said first component (16) is rotatably connected to said base portion (12) through one or more hinges (18) that allow it to rotate with respect to said base portion (12) around a first axis (A), and **in that** said second component (20) is rotatably connected to said first component (16) through one or more hinges (22) that allow it to rotate with respect to said first component (16) around a second axis (B), said first axis (A) being parallel with respect to said second axis (B).

## Patentansprüche

1. Staubehälter (10) für Motorräder, der ein Unterteil (12), das mit Mitteln zum Verbinden mit einem Rahmen oder einem Körper eines Motorrads versehen ist, und einen Deckel (14) umfasst, der auf dieses Unterteil (12) geschlossen werden kann, um mit ihm einen Stauraum zu definieren, wobei dieser Deckel (14) aus mindestens einer ersten Komponente (16) und mindestens einer zweiten Komponente (20) besteht, die in gefluchteter Stellung den Deckel (14) bilden, wobei die erste Komponente (16), um geöffnet zu werden, an das Unterteil (12) angelenkt ist und die zweite Komponente (20), um wie eine Klappe geöffnet zu werden, an diese erste Komponente (16) angelenkt ist, wobei lösbare Haltemittel (26; 36; 38) vorgesehen sind, die sich zwischen einer Stellung, in der sie die erste Komponente (16) und die zweite Komponente (20) in gefluchteter Stellung halten, so dass der Deckel (14) vollständig geöffnet sein kann, und einer Stellung bewegen können, in der sie die erste Komponente (16) in geschlossener Stellung an dem Unterteil (12) festhalten und der zweiten Komponente (20) die freie Drehung gegenüber der ersten Komponente (16) ermöglichen, so dass der Deckel (14) teilweise geöffnet sein kann, **dadurch gekennzeichnet, dass** die lösbaren Haltemittel ein ankerförmiges Element (26) umfassen, das innerhalb der ersten Komponente (16) drehbar befestigt ist und selektiv mit einem Zapfen (36) der zweiten Komponente (20), der auf einer Innenfläche dieser zweiten Komponente (20) ausgebildet ist, oder mit einem Zapfen (38) des Unterteils (12), der auf einer Innenfläche dieses Unterteils (12) ausgebildet ist, in Eingriff gebracht werden kann.

2. Staubehälter (10) nach Anspruch 1, **dadurch gekennzeichnet, dass** zwischen der zweiten Komponente (20) des Deckels (14) und dem Unterteil (12) mindestens eine Vorrichtung (24) zum Schließen/Öffnen des Staubehälters (10) angeordnet ist, die es ermöglicht, dass die aus der ersten Komponente (16) und der zweiten Komponente (20) des Deckels (14) bestehende Anordnung in Bezug auf das Unterteil (12) geöffnet/geschlossen wird, wenn das ankerförmige Element (26) in Eingriff mit dem Zapfen (36) der zweiten Komponente (20) ist, dass nur die zweite Komponente (20) des Deckels (14) in Bezug auf die erste Komponente (16) geöffnet/geschlossen wird, wenn das ankerförmige Element (26) in Eingriff mit dem Zapfen (38) des Unterteils (12) ist, und dass der Staubehälter (10) am Motorrad befestigt bzw. von ihm gelöst wird.

3. Staubehälter (10) nach Anspruch 1 oder 2, **dadurch gekennzeichnet, dass** das ankerförmige Element (26) mit zwei verschiedenen entgegengesetzten hakenförmigen Abschnitten (28, 30) versehen ist, die mit dem Zapfen (36) der zweiten Komponente (20) beziehungsweise mit dem Zapfen (38) des Unterteils (12) in Schnappeingriff gebracht werden können.

4. Staubehälter (10) nach Anspruch 3, **dadurch gekennzeichnet, dass** sich das ankerförmige Element (26) frei um einen Zapfen (32) drehen kann, der integral mit der Innenfläche der ersten Komponente (16) ist.

5. Staubehälter (10) nach Anspruch 4, **dadurch gekennzeichnet, dass** auf dem mit der Innenfläche der ersten Komponente (16) integralen Zapfen (32) eine Scheibe (34) befestigt ist, wobei diese Scheibe (34) geeignet ist zu verhindern, dass sich das ankerförmige Element (26) ungewollt löst, so dass das ankerförmige Element (26) zwischen der Innenfläche der ersten Komponente (16) und der Scheibe (34) angeordnet ist.

6. Staubehälter (10) nach einem der Ansprüche 3 bis 5, **dadurch gekennzeichnet, dass** jeweilige Scheiben (40, 42) auf dem Ende des Zapfens (36) der zweiten Komponente (20) und auf dem Ende des Zapfens (38) des Unterteils (12) befestigt sind, wobei diese Scheiben (40, 42) jeweils geeignet sind, die entgegengesetzten hakenförmigen Abschnitte (28, 30) festzuhalten, wenn sie sich im Schnappeingriff mit dem Zapfen (36) der zweiten Komponente (20) beziehungsweise mit dem Zapfen (38) des Unterteils (12) befinden.

7. Staubehälter (10) nach einem der Ansprüche 3 bis 6, **dadurch gekennzeichnet, dass** zwei Stifte (44, 46) auf der Innenfläche der ersten Komponente (16) ausgebildet sind, wobei diese Stifte als Drehanschläge für das ankerförmige Element (26) wirken und so angeordnet sind, dass sich das ankerförmige Element (26) nicht ungewollt in eine falsche Stellung drehen kann, sondern stattdessen einen auf die zwei Stellungen des Schnappeingriffs mit dem Zapfen (36) der zweiten Komponente (20) oder mit dem Zapfen (38) des Unterteils (12) begrenzten Drehwinkel aufweist.

8. Staubehälter (10) nach einem der vorhergehenden Ansprüche, **dadurch gekennzeichnet, dass** die erste Komponente (16) durch eines oder mehrere Gelenke (18) drehbar mit dem Unterteil (12) verbunden ist, die ihr das Drehen gegenüber dem Unterteil (12) um eine erste Achse (A) ermöglichen, und dadurch, dass die zweite Komponente (20) durch eines oder mehrere Gelenke (22) drehbar mit der ersten Komponente (16) verbunden ist, die ihr das Drehen gegenüber der ersten Komponente (16) um eine zweite Achse (B) ermöglichen, wobei diese erste Achse (A) parallel zu dieser zweiten Achse (B) ist.

## Revendications

1. Boîte de rangement (10) pour motocyclettes, comprenant une partie de base (12), munie de moyens d'accouplement avec un châssis ou une carrosserie d'une motocyclette, et un couvercle (14) qui peut être fermé sur ladite partie de base (12) pour définir un espace de remplissage fermé avec celle-ci, ledit couvercle (14) consistant en au moins un premier composant (16) et au moins un deuxième composant (20) qui, en position alignée, forment ledit couvercle (14), le premier composant (16) étant articulé, pour être ouvert, à ladite partie de base (12) et le deuxième composant (20) étant articulé, pour être ouvert comme un volet, audit premier composant (16), dans lequel sont prévus des moyens de blocage libérables (26; 36; 38) qui sont capables de se déplacer entre une position dans laquelle ils bloquent le premier composant (16) et le deuxième composant (20) en position alignée, de manière que ledit couvercle (14) puisse être complètement ouvert, et une position dans laquelle ils bloquent le premier composant (16) en position fermée avec ladite partie de base (12) en permettant au deuxième composant (20) de pivoter librement par rapport au premier composant (16), de manière que ledit couvercle (14) puisse être partiellement ouvert, **caractérisée en ce que** lesdits moyens de blocage libérables comprennent un élément en forme d'ancre (26), fixé de manière rotative à l'intérieur dudit premier composant (16) et adapté pour être engagé sélectivement avec une goupille (36) du deuxième composant (20), formée sur une surface intérieure dudit deuxième composant (20), ou avec une goupille (38) de la partie de base (12), formée sur une surface intérieure de ladite partie de base (12).

2. Boîte de rangement (10) selon la revendication 1, **caractérisée en ce qu'**au moins un moyen (24) pour fermer/ouvrir la boîte de rangement (10) est prévu entre le deuxième composant (20) du couvercle (14) et la partie de base (12), lequel permet à l'ensemble composé dudit premier composant (16) et dudit deuxième composant (20) dudit couvercle (14) d'être ouvert/fermé par rapport à ladite partie de base (12) quand ledit élément en forme d'ancre (26) est engagé avec la goupille (36) dudit deuxième composant (20), seulement au deuxième composant (20) dudit couvercle (14) d'être ouvert/fermé par rapport audit premier composant (16) quand ledit élément en forme d'ancre (26) est engagé avec la goupille (38) de ladite partie de base (12), et à la boîte de rangement (10) d'être attachée/détachée par rapport à la motocyclette.

3. Boîte de rangement (10) selon la revendication 1 ou 2, **caractérisée en ce que** ledit élément en forme d'ancre (26) est muni de deux portions à crochet opposées distinctes (28, 30) qui peuvent être engagées par enclenchement respectivement avec ladite goupille (36) du deuxième composant (20) ou avec ladite goupille (38) de la partie de base (12).

4. Boîte de rangement (10) selon la revendication 3, **caractérisée en ce que** ledit élément en forme d'ancre (26) est libre de pivoter autour d'une goupille (32) d'une seule pièce avec la surface intérieure dudit premier composant (16).

5. Boîte de rangement (10) selon la revendication 4, **caractérisée en ce que** une rondelle (34) est fixée sur ladite goupille (32) d'une seule pièce avec la surface intérieure dudit premier composant (16), ladite rondelle (34) est adaptée pour empêcher ledit élément en forme d'ancre (26) de se détacher accidentellement, de manière que ledit élément en forme d'ancre (26) soit disposé entre la surface intérieure dudit premier composant (16) et ladite rondelle (34).

6. Boîte de rangement (10) selon l'une quelconque des revendications 3 à 5, **caractérisée en ce que** des rondelles respectives (40, 42) sont fixées sur l'extrémité de ladite goupille (36) du deuxième composant (20) et sur l'extrémité de ladite goupille (38) de la partie de base (12), lesdites rondelles (40, 42) sont adaptées respectivement pour retenir lesdites portions à crochet opposées (28, 30) quand elles sont engagées par enclenchement respectivement avec ladite goupille (36) du deuxième composant (20) ou avec ladite goupille (38) de la partie de base (12).

7. Boîte de rangement (10) selon l'une quelconque des revendications 3 à 6, **caractérisée en ce que** deux chevilles (44, 46) sont formées sur la surface intérieure dudit premier composant (16), lesdites chevilles fonctionnant comme des butées de rotation pour ledit élément en forme d'ancre (26) et étant agencées de manière que ledit élément en forme d'ancre (26) ne puisse pas pivoter accidentellement dans une position incorrecte, mais ait au contraire un angle de rotation limité aux deux positions d'engagement par enclenchement avec ladite goupille (36) du deuxième composant (20) ou avec ladite goupille (38) de la partie de base (12).

8. Boîte de rangement (10) selon l'une quelconque des revendications précédentes, **caractérisée en ce que** ledit premier composant (16) est connecté de manière rotative à ladite partie de base (12) par l'intermédiaire d'une ou plusieurs charnières (18) qui lui permettent de pivoter par rapport à ladite partie de base (12) autour d'un premier axe (A), et **en ce que** ledit deuxième composant (20) est connecté de manière rotative audit premier composant (16) par l'intermédiaire d'une ou plusieurs charnières (22) qui lui permettent de pivoter par rapport audit premier composant (16) autour d'un deuxième axe (B), ledit premier axe (A) étant parallèle audit deuxième axe (B).
